# EUROPEAN PATENT SPECIFICATION

(11) **EP 3 978 986 B1**
(45) Date of publication and mention of the grant of the patent: **16.09.2026**
(21) Application number: 20199164.3
(22) Date of filing: 30.09.2020
(51) Int. Cl.: G02B 26/08, G03B 21/00

(54) **MIRROR SYSTEM FOR A PROJECTION APPARATUS**
SPIEGELSYSTEM FÜR EINE PROJEKTIONSVORRICHTUNG
SYSTÈME DE MIROIR POUR UN APPAREIL DE PROJECTION

(43) Date of publication of application: 06.04.2022
(73) Proprietor: IMEC VZW, 3001 Leuven (BE)
(72) Inventor: SAITO, Daisuke, 3001 Leuven (BE); ROCHUS, Veronique, 3001 Leuven (BE); IKEDA, Koichi, 3001 Leuven (BE)
(74) Representative: Roth, Sebastian

(56) References cited:
- US-A1- 2005 111 069
- US-A1- 2010 291 410
- US-A1- 2018 290 880

## Description

### TECHNICAL FIELD OF THE INVENTION

The present disclosure relates to a mirror system for a projection apparatus and to a projection apparatus comprising such a mirror system.

### BACKGROUND OF THE INVENTION

Generally, a spatial light modulator (SLM) is a device, which spatially modulates a light beam, e.g. to generate an image. An example for an SLM is a video projector, which dynamically modulates a light beam to generate a video that can be projected onto a surface.

An SLM can use a digital mirror device (DMD) to modulate the light. A DMD comprises an array of mirrors, which can be individually deflected or tilted to achieve a certain light modulation. The mirrors are usually micro mirrors, which are MEMS components that are actuated electronically. In order to generate a specific image, certain mirrors of the array are set to an ON state, where they reflect the light beam onto the aperture, while other mirrors are set to an OFF state, where they reflect the light beam away from the aperture. Typically, each mirror of the mirror array corresponds to one pixel of the generated image.

The technical trend of SLMs with DMDs goes towards a fine pixel pitch of the image, which is achieved by mirror arrays with small mirror pitch. At the same time, the fill factor of the mirror array should be kept as high as possible, i.e. the distance between the mirrors should be as small as possible. This can lead to several problems, such as a lower optical efficiency of the DMD and a lower contrast of the generated image.

Furthermore, stiction effects can occur if a tilted mirror is in physical contact to an underlying substrate. Such stiction effects can make it difficult to quickly switch the mirror between the ON and OFF state and, thus, decrease the switching speeds and the reliability of the mirror array.

US 2010291410 A1 discloses systems and methods, such as for a microelectromechanical system (MEMS) device, including a component having a contact portion that includes on one side a layer including hydrophilic functional groups and a coating formed on the layer. The coating can include hydrophilic functional groups adapted to interact with the hydrophilic functional groups of the layer. The coating can also include hydrophobic functional groups opposite the hydrophilic functional groups of the coating.

US 2005111069 A1 discloses a micro-mirror device including a micro-mirror and a flexure spring supporting the micro-mirror. The flexure spring is configured to store potential energy during movement of the micro-mirror that is released as kinetic energy to drive movement of the micro-mirror when the micro-mirror is re-oriented.

US 2018290880 A1 discloses a MEMS including a first element and a second element. The first element is mounted on a substrate and has a first contact surface. The second element is mounted on the substrate and has a second contact surface that protrudes from the second element to form an acute contact surface. The first element and/or the second element is/are operable to move in: a first direction, such that the first contact surface comes in contact with the second contact surface; and a second direction, such that the second contact surface separates from the first contact surface.

### SUMMARY OF THE INVENTION

Thus, it is an objective to provide an improved mirror system for a projection apparatus and to provide an improved projection apparatus comprising such a mirror system. In particular, the above-mentioned disadvantages should be avoided.

The objective is achieved by the embodiments provided in the enclosed independent claims. Advantageous implementations of the embodiments of the invention are further defined in the dependent claims.

According to a first aspect, the present disclosure relates a mirror system for a projection apparatus according to claim 1.

This achieves the advantage that the spring element is efficiently arranged to reduce stiction between the tilted mirror and the support surface or an element thereon.

Further, this achieves the advantage that the mirrors can be switched more efficiently between the ON and the OFF state. In particular, the effect of stiction that occurs when a tilted mirror is in physical contact with a surface can be mitigated by the spring elements. As a consequence, less force, i.e. less energy, is required to actuate the movement of the mirrors and the switching time, i.e. the time required to switch a mirror between the ON and the OFF state, is shortened.

Preferably, the first tilting position corresponds to an ON state of each mirror, and the second tilting position corresponds to an OFF state of each mirror. In particular, each mirror in the ON state corresponds to a bright pixel, and each mirror in the OFF state corresponds to a dark pixel in an image that is generated by the projection apparatus.

Preferably, the mirror system comprises a mirror array. The plurality of mirrors may comprise all or a part of the mirrors of the mirror array. The mirror array can have a mirror pitch of less than 5 µm, in particular 4 µm, and/or a filling factor of more than 80%, in particular more than 90%, more particular more than 95%.

The projection apparatus can be a spatial light modulator (SLM), e.g. a video projector, and the mirror system can be a digital mirror device (DMD) of the SLM.

Preferably, the first and the second tilting position are discrete positions, i.e. the tilting positions and the respective tilting angles are clearly defined.

In particular, each mirror in the second tilting position is arranged to reflect the light beam that is emitted from the light source onto a light absorption structure of the projection apparatus.

In an embodiment, the spring element of each mirror supports a movement of the mirror from the first to the second tilting position and vice versa, preferably by providing energy which was built up by a deformation of the spring element in the first and/or second tilting position off the mirror. This provides the advantage that the switching time is shortened and that less energy is required to switch the mirror from the ON to the OFF state and vice versa.

In an embodiment, the spring element of each mirror comprises at least one layer on the underside of the mirror, which at least partially covers the underside of the mirror. This achieves the advantage that the spring element takes up little space and can be manufactured together with the remaining mirror. In particular, the at least one layer can be a spring layer.

In particular, each mirror of the system is formed by several material layers. The mirror can comprise a substrate layer, a reflective mirror layer on top of the substrate layer and at least one spring layer on the bottom of the substrate layer that forms the spring element.

Preferably, the protrusions of the spring element are formed by recesses in the mirror above the spring layer. The spring element can be loaded by a deformation of one of its protruding sections.

In an embodiment, the spring element of each mirror comprises at least two spring structures pointing towards the support surface. This achieves the advantage that the spring element is efficiently arranged to reduce stiction between the tilted mirror and the support surface or an element thereon. In particular, at least one spring structure is arranged at each side of the tilting axis of the mirror.

In an embodiment, the spring element is made from a titanium alloy, such as titanium aluminium nitride, TiAlN, titanium aluminide, TiAl, titanium silicon aluminide TiSiAl, or titanium aluminium silicon nitride, TiAlSiN.

In an embodiment, a landing structure is arranged on the support surface below each mirror of the plurality of mirrors, wherein the spring element of each mirror in the first and/or the second tilting position is in physical contact with the landing structure. This achieves the advantage that the first and the second tilting position can be defined by the geometry and position of the landing structures.

In an embodiment, the landing structure below each mirror comprises two elevated structures, wherein the elevated structures are the contact points for the spring element of the mirror in the first respectively second tilting position.

In an embodiment, a, preferably conductive, mount is arranged on the support surface below each of the plurality of mirrors, wherein each of the plurality of mirrors is fixed to the support surface by the respective mount that is arranged below that mirror. This achieves the advantage that the mirrors can be efficiently mounted on the support surface.

In an embodiment, each of the plurality of mirrors comprises a hinge structure, which is preferably formed from the same layer as the spring element, on the bottom of the mirror, wherein the respective mount is fixed to the hinge structure of the mirror. This achieves the advantage that the mirrors can be efficiently tilted.

Preferably, the hinge structure comprises or is formed by a hinge layer. The hinge layer and the spring layer can be identical, i.e. they can be the same layer. This can lead to a reduced thickness of the mirror and can simplify its fabrication.

In an embodiment, each of the plurality of mirrors comprises a cavity on the bottom of the mirror, wherein the attachment point of the respective mount is arranged in or below the cavity. This achieves the advantage that an efficient tilting of the mirror around the mount can be achieved. In particular, it can be avoided that the movement of the mirror is limited by the underside of the mirror bumping against the mount. For example, the cavity is a channel along a diagonal line between two opposite corners of the mirror.

In an embodiment, a pair of actuation electrodes are arranged on the support surface below each of the plurality of mirrors, wherein the actuation electrodes below each mirror are configured to actuate the movement of the mirror from the first to the second tilting position and vice versa. This achieves the advantage that the tilting of each mirror can be efficiently controlled.

In an embodiment, a tilting axis of each of the plurality of mirrors passes through or lies below the center of gravity of the mirror. This achieves the advantage that a variation of the tilting angle due to misalignments of the mirrors can be mitigated. For asymmetric mirrors, i.e. mirrors where the tilting axis is laterally offset to the center of gravity, such misalignments have a stronger effect on the tilting angle variation, which decreases the contrast of a generated image.

In particular, the tilting axis of each of the plurality of mirrors passing through or lying below the center of gravity of the mirror means that the horizontal tilting axis is perpendicular to a vertical symmetry axis passing through the center of gravity of the mirror.

In an embodiment, an inclination of each mirror in the first tilting position to the mirror in the second tilting position is at least 10°, preferably at least 20°. This achieves the advantage that light that is reflected off mirrors in the second tilting position can be focused away more efficiently form the aperture, thus, increasing the contrast of the image that is generated by the projection apparatus. In particular, the amount of diffraction or stray light that reaches the aperture from mirrors in the second tilting position can be reduced

In an embodiment, the angle at which the highest-intensity diffraction order of the light beam is reflected off at least some of the mirrors of the plurality of mirrors that are arranged in the second tilting position corresponds to a Blaze angle. This achieves the advantage that light that is reflected off mirrors in the second tilting position is efficiently focused away from the aperture. In particular, the amount of diffraction light and/or stray light from mirrors in the second tilting position that reaches the aperture is reduced.

The at least some of the mirrors of the plurality of mirrors that are arranged in the second tilting position form a Blazed grating for the light beam.

In other words, some or all of the mirrors that are arranged in the second tilting position fulfill the Blazed condition for the light that is emitted by the light source of the projection apparatus. In particular, the angle of the light beam that is reflected off the at least some of the mirrors in the second tilting position corresponds to a -1st or order diffraction, of the Blazed grating.

In particular, the Blaze grating condition is fulfilled for light in the wavelength range that is emitted by the light source of the projection apparatus.

According to a second aspect, the present disclosure relates to a projection apparatus, comprising a light source, an aperture and a mirror system according to the first aspect of the present disclosure.

This achieves the advantage that a projection apparatus with a more reliable image generation can be provided.

### BRIEF DESCRIPTION OF THE DRAWINGS

The invention will be explained in the followings together with the figures.
- Figs. 1: shows a schematic diagram of a mirror system according to an embodiment;
- Figs. 2: shows a schematic diagram of a section of a mirror system according to an embodiment;
- Figs. 3a-b: show bottom views and a perspective view of the section of the mirror system from Fig. 2 according to an embodiment;
- Fig. 4: shows a schematic diagram of a section of a mirror system according to an embodiment;
- Figs. 5a-b: show bottom views and a perspective view of the section of the mirror system from Fig. 3 according to an embodiment;
- Figs. 6a-b: show enlarged views of an edge of a mirror of a mirror system according to further embodiments;
- Figs. 7a-b: show bottom views of a mirror of a mirror system according to further embodiments; and
- Figs. 8a-b: show schematic diagrams of a projection apparatus according to an embodiment.

### DETAILED DESCRIPTION OF THE PREFERRED EMBODIMENTS

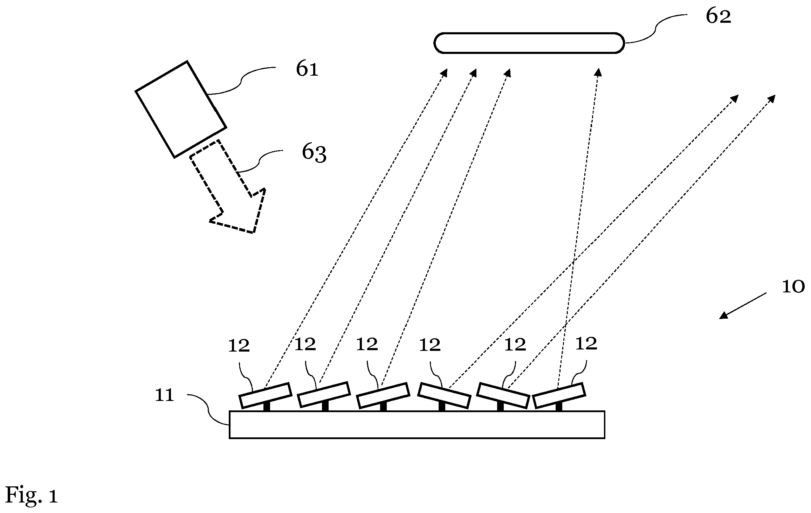

Figs. 1 shows a schematic diagram of a mirror system 10 according to an embodiment. The mirror system 10 is suitable for a projection apparatus, which comprises a light source 61 and an aperture 62.

The mirror system 10 comprises a support surface 11, and a plurality of mirrors 12 arranged on the support surface 11, wherein each of the plurality of mirrors 12 is arranged tiltable between a first tilting position and a second tilting position, wherein the first tilting position and the second tilting position are discrete positions. Each mirror 12 in the first tilting position is arranged to reflect a light beam 63 that is emitted from the light source 61 onto the aperture 62, and each mirror 12 in the second tilting position is arranged to reflect the light beam 63 that is emitted from the light source 61 away from the aperture 62. Thereby, each of the plurality of mirrors 12 comprises a spring element on an underside of the mirror 12.

The mirrors 12 on the support surface 11 can form a mirror array, e.g. a square or a hexagonal array. The mirror array can have a mirror pitch of less than 5 µm, e.g. 4 µm, and/or a filling factor of more than 80%, in particular more than 90%, more particular more than 95%.

In particular, the first and the second tilting position are discrete positions, i.e. the tilting positions and the respective tilting angles are clearly defined. The tilting positions can be defined by a respective tilting angle relative to the axis that is perpendicular to the support surface.

In the exemplary embodiment of Fig. 1, the first three mirrors 12 from the left are arranged in the first tilting position, the fourth and fifth mirror 12 are arranged in the second tilting position, and the sixth mirror 12 is again arranged in the first tilting position. The first tilting position can correspond to an ON state of the mirrors 12, and the second tilting position can correspond to an OFF state of the mirrors 12. In particular, each mirror 12 in the ON state corresponds to a bright pixel, and each mirror 12 in the OFF state corresponds to a dark pixel in an image that is generated on a screen behind the aperture 62.

The inclination of each mirror 12 in the first tilting position to the mirror 12 in the second tilting position can be at least 10°, preferably at least 20°. In particular, the larger this inclination, the better diffractions and stray light from the mirrors 12 in the OFF state can be deflected from the aperture 62.

Some or all of the mirrors 12 that are arranged in the second tilting position (OFF state) form a Blazed grating for the light beam 63, i.e. some or all mirrors 12 in the second tilting position fulfill the Blazed condition for the light of the light beam 63. The angle, at which the light beam 63 is reflected off each mirror 12 in the second tilting, may thereby correspond to a Blaze angle of the Blazed grating, in particular to a -1^{st}. -2^{nd}, or -n^{th} order diffraction of the Blazed grating. In this way, the intensity of the light that is reflected off the mirrors 12 in the OFF state is focused on a spot away from the aperture 62, such that even less light from these mirrors 12 reaches the aperture 62.

In particular, further optical elements, such as lenses, prisms, mirrors, filters or optical integrators, which are not shown in Fig. 1, can be arranged between the light source 61 and the mirror system 10 and/or between the mirrors system 10 and the aperture 62, in order to efficiently guide the light between these components.

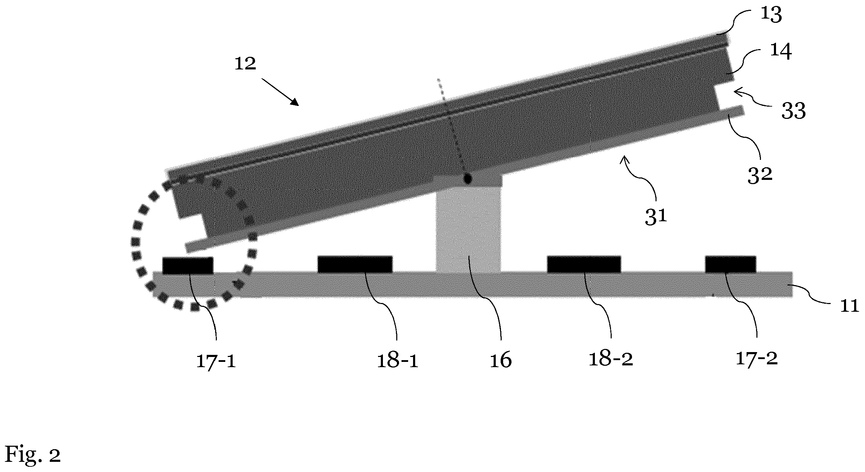

Fig. 2 shows a schematic diagram of a section of the mirror system 10 according to an embodiment. The depicted section comprises a single mirror 12 of the system 10. In particular, each mirror 12 of the mirror system 10 in Fig. 1 might be configured according to the mirror 12 shown in Fig. 2.

The mirror 12 shown in Fig. 2 comprises a spring element 31. The spring element 31 can be formed by a spring layer 32 on the bottom side of the mirror 12. In particular, each mirror 12 of the system 10 is formed by several material layers. The material layers of each mirror 10 can comprise at least a substrate layer 14, a reflective mirror layer 13 on top of the substrate layer and the spring layer 32 on the bottom of the substrate layer 14 that forms the spring element 31.

In the embodiment shown in Fig. 2, the spring element 31 protrudes from the underside of the mirror 12 at two opposite sides of the mirror 12. To generate this protrusion, the substrate layer comprises a respective recess 33 on each side of the mirror 12 above the spring layer 32.

A landing structure, which is formed by two elevated structures 17-1, 17-2, can be arranged on the support surface 11 below the mirror 12. The elevated structures 17-1, 17-2 are the contact points for the spring element 31, especially of the protrusions of the spring element 31, of the mirror 12 in the first respectively second tilting position. In particular, in the tilting position shown in Fig. 2, which can correspond to the ON state, the spring element 31 is in physical contact with the left elevated structure 17-1. In the other tilting position (OFF state), the spring element 31 is in physical contact with the right elevated structure 17-2.

Preferably, the protruding section of the spring element 31 that is in physical contact with the elevated structure 17-1 is deformed. This deformation causes a built-up of energy in the spring element 31, in particular in the protruding section, which can be released if the mirror 12 is switched to the other tilting position, e.g. from the ON position in Fig. 2 to the OFF position. The release of this energy can support the movement of the mirror 12 such that less actuation energy must be provided to switch the mirror 12 from one position to the other and the switching speed is enhanced. Furthermore, the effect of stiction between the mirror 12 and the landing structure 17-1, 17-2 can be mitigated by the spring element 31 due to this energy release.

In Fig. 2, both elevated structures 17-1, 17-2 have the same height and the same distance to the tilting axis of the mirror 12. It is, however, also conceivable that the elevated structures 17-1, 17-2 have a different height and/or are arranged at different distances from the tilting axis of the mirror 12, causing an asymmetry between the first and the second tilting position. In particular, the elevated structures 17-1, 17-2 can be stopper structures, stopper electrodes and/or posts on the support surface 11.

The mirror 12 can be fixed to the support surface 11 via a mount 16 that is arranged on the support surface 11 below the mirror 12. Preferably, the mount 16 is conductive.

The mount 16 can be aligned to the center of gravity of the mirror 12, i.e. a central axis of the mount is directly arranged below the center of gravity of the mirror 12. The mirror 12 can comprise a hinge structure (not shown in Fig. 2) for fixing the mount 16 to mirror 12 in such a way that the mirror 12 can be tilted around the mount 16.

To actuate the movement of the mirror 12 from the first to the second tilting position and vice versa, a pair of actuation electrodes 18-1, 18-2 can be arranged on the support surface 11 below the mirror 12.

The actuation electrodes 18-1, 18-2 can be configured to actuate the mirror 12 movement via electrostatic force. The electrostatic force can be generated by applying a voltage between one or both actuation electrodes 18-1, 18-2 and the mirror 12. The voltage can be a bias voltage of ca. 36 V. The required voltage can depend on the size and position of the actuation electrodes 18-1, 18-2, the size and arrangement of the mirror 12 and/or the design of the spring element 31. In particular, to amplify the effect of the applied voltage, the actuation electrodes 18-1, 18-2 should be designed as big as possible. The mirror 12 can comprise an electrically conductive layer, which is at least arranged in an area above the actuation electrodes 18-1, 18-2. The electrically conductive layer can be electrically connected to the hinge structure of the mirror.

The actuation electrodes 18-1, 18-2 can be arranged on opposite sides and at equal distances to the tilting axis of the mirror 12, i.e. the actuation electrodes 18-1, 18-2 are arranged symmetrically with respect to the mirror 12. This achieves the advantage that the same pull on the mirror 12 for a certain applied voltage can be achieved in the ON and the OFF state of the mirror 12.

Preferably, after a suitable actuation pulse sequence is applied and the mirror 12 is latched into a tilted position, the tilt angle can be tuned slightly depending on the voltage applied on the actuation electrodes 18-1, 18-2. This is because the hinge flexes with the applied latch voltage. To achieve a fast position switching, a pulse sequence with optimized timing and voltage is used.

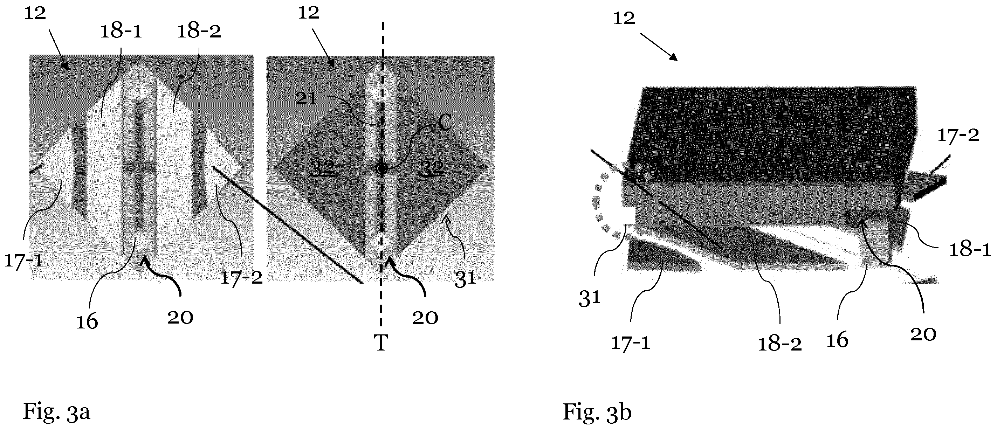

Figs. 3a-b show bottom views and a perspective view of the section of the mirror system 10 from Fig. 2 according to an embodiment. Thereby, the support surface 11 below the mirror 12 is omitted.

Fig. 3a shows two bottom view images of the mirror. In the left image the actuation electrodes 18-1, 18-2 and the elevated structures 17-1, 17-2 below the mirror 12 are visible and in the right image these structures are omitted so that the spring layer 32 on the bottom of the mirror is visible.

The bottom view images in Fig. 3a show that the mount 16 may comprise two pillars that are attached to a hinge structure 21 of the mirror 12. The hinge structure 21 can be a hinge layer on the bottom of the mirror 12.

The mirror 12 can have a quadratic shape, and the pillars of the mount 16 can be arranged below the mirror along a diagonal connecting line between two opposite corners of the mirror 12. In this configuration, the tilting axis T of the mirror 12 is congruent with this diagonal connecting line and passes through or lies below the center of gravity C of the mirror 12, as indicated in the right image in Fig. 3a. For example, the quadratic mirror 12 has a size of 4x4 µm, is arranged at ca. 0.2 µm above the support surface and has a gap of 0.57 µm to a neighboring mirror 12 in the mirror system 10.

Fig. 3a shows that the mount 16 may comprise two pillars that are attached to a hinge structure 21 of the mirror 12. The hinge structure 21 can be a hinge layer on the bottom of the mirror 12. The hinge layer and the spring element 31, in particular the spring layer 32, can be connected. In particular, the hinge layer and the spring layer 32 can be formed by the same material layer on the bottom of the mirror.

The spring layer 32 and, thus, the spring element 31 can be made from a titanium alloy, such as titanium aluminium nitride (TiAlN), titanium aluminide (TiAl), titanium silicon aluminide (TiSiAl), or titanium aluminium silicon nitride (TiAlSiN).

The mirror 12 can further have a groove or cavity 20 on the bottom of the mirror, wherein the attachment point of the mount 16 is arranged in or below the cavity 21 on the bottom of the mirror 12. For instance, the cavity 20 is a channel that runs along the diagonal connecting line. This cavity 20 can facilitate the tilting of the mirror 12 around the hinge 21 by preventing the mirror 12 from pushing against the mount 16 during tilting.

The hinge structure 21 can at least partially be arranged in the cavity 20. In the particular, the hinge structure 21 is designed to align the tilting axis T such that it passes through or lies below the center of gravity C of the mirror.

Fig. 3a shows that the spring element can essentially be comprised of two sections on both sides of the tilting axis T of the mirror. Both of these sections can be formed by a respective spring layer section 32 on the bottom of the mirror 12. The two sections 32 can be connected via the hinge structure 21.

Fig. 3b shows the protruding spring element 31 below the recess 33 in the mirror 12.

The recesses 33 can be arranged in such a way that the spring element 31 protrudes at or around two opposite corners of the mirror 12. The protruding section of the spring element forms a rim around the opposite corners of the mirror 12.

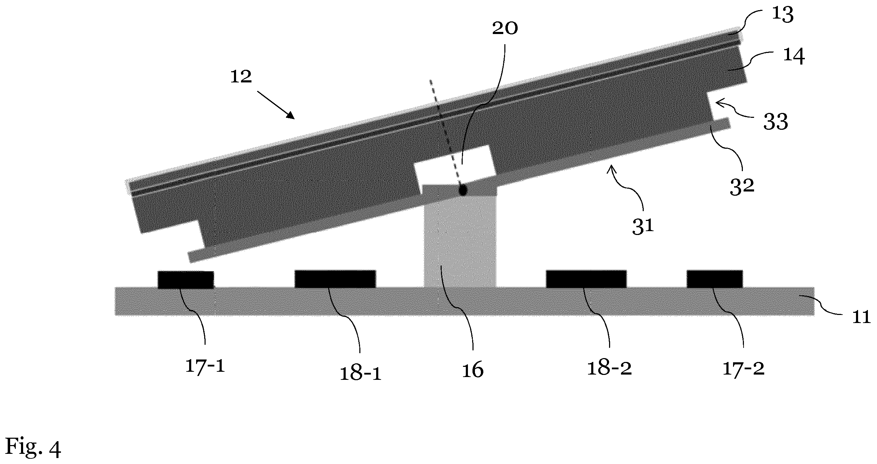

Fig. 4 shows a schematic diagram of a section of the mirror system 10 according to a further embodiment. The depicted section comprises a single mirror 12 of the system 10. In particular, each mirror 12 of the mirror system 10 in Fig. 1 might be configured according to the mirror shown in Fig. 4.

In the exemplary embodiment of Fig. 4, the spring element 31 does not protrude as far from the underside of the mirror 12 as in the mirror 12 shown in Fig. 2. In other words, the protruding section of the spring element 31 at the edge of the mirror 12 is offset inwards in the direction of the tilting axis of the mirror.

Preferably, by controlling the size of the protrusion of the spring element 31, the spring constant of the spring element 31, especially of the protruding sections, can be controlled. For instance, due to the shorter protrusion it requires more force to deform the protruding section of the spring element 31 shown in Fig. 4 compared to the one shown in Fig. 2.

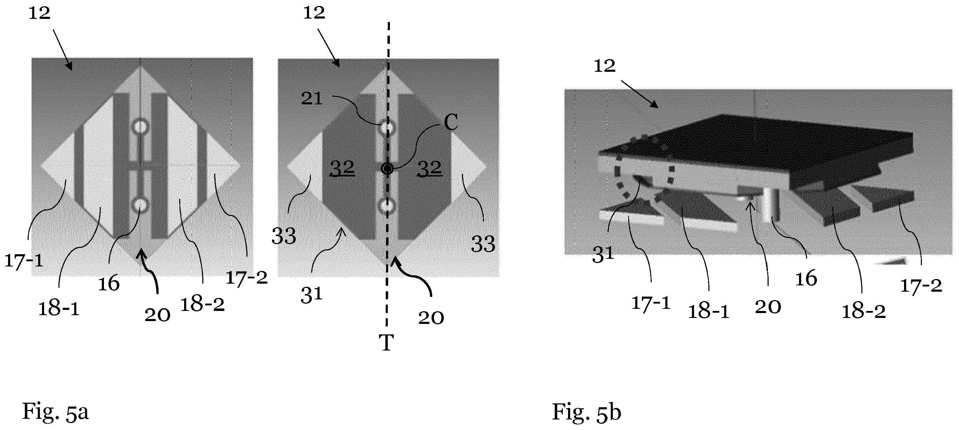

Figs. 5a-b show bottom views and a perspective view of the section of the mirror system from Fig. 4 according to an embodiment. Thereby, the support surface 11 below the mirror 12 is omitted.

Fig. 5a shows again two bottom view images of the mirror 12. In the left image the actuation electrodes 18-1, 18-2 and the elevated structures 17-1, 17-2 below the mirror 12 are visible and in the right image these structures are omitted so that the spring layer 32 on the bottom of the mirror is visible. Due to the offset of the spring element 31 in the two opposite corners of the mirror 12, the recess 33 above the spring layer 32 is visible in Fig. 3a (right image).

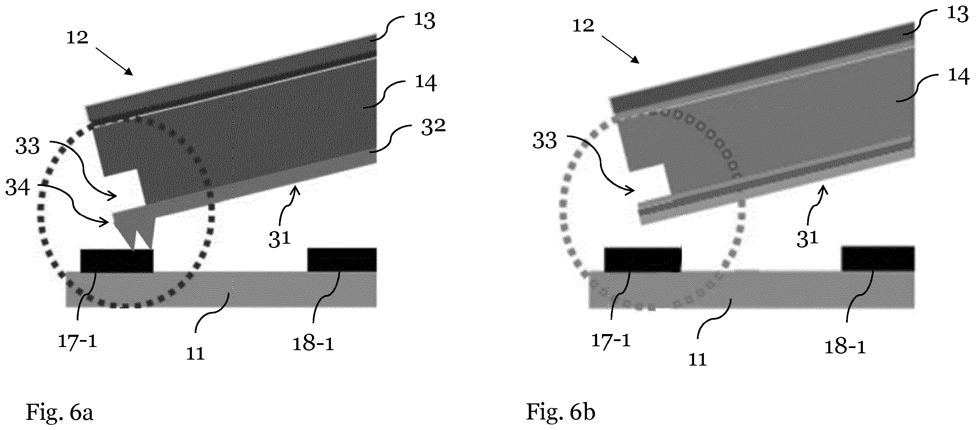

Figs. 6a and 6b show enlarged views of an edge of a mirror 12 of the mirror system 10 according to further embodiments. In particular, each mirror 12 of the mirror system 10 in Fig. 1 might be configured according to the mirror shown in Figs 6a or 6b.

In the embodiment shown in Fig. 6a, the spring element 31 of the mirror 12 comprises a spring structure 34 which points towards the support surface. The mirror establishes physical contact with the elevated structure 17-1 via this spring structure 34. For instance, the mirror in Fig. 4a is in the ON state.

The spring structure 34 may comprise one or more downward facing conical structures. Preferably, the spring structure 34 is arranged on the spring layer 32 and is formed from the same material as the spring layer 32.

In particular, the mirror 12 in Fig. 6a comprises another essentially identical spring structure 34 on the opposite edge (not shown), which establishes contact with the landing structure in the OFF state of the mirror 12.

In the embodiment shown in Fig. 6b, the spring element 31 of the mirror 12 is formed by a more than one spring layer.

Preferably, the spring structure 34 shown in Fig. 6a and the layer structure of the spring element 31 shown in Fig. 6b allow to accurately control and adjust the spring constant of the spring element 31. For instance, by adjusting the shape and size of the spring structure and/or the composition and thickness of the spring layers a certain spring constant can be set. In this way, the spring element 31 can be optimized for the requirements of the mirror system 10, e.g. the size of the mirrors 12 or certain switching times.

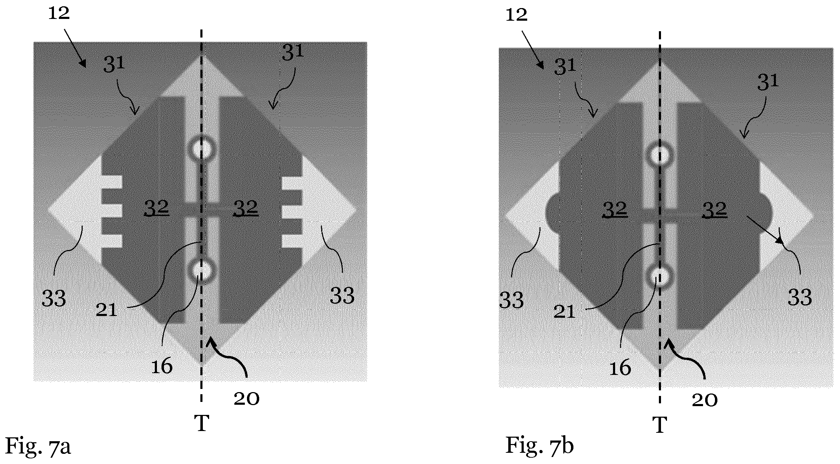

Figs. 7a and 7b show bottom views of a mirror 12 of the mirror system 10 according to further embodiments. In particular, each mirror 12 of the mirror system 10 in Fig. 1 might be configured according to the mirrors 12 shown in Figs 7a or 7b.

In Figs. 7a and 7b the spring element 31, in particular the spring layer 32, is structured on the two opposite edges of the mirror 12. This structuring is preferably arranged at the sections of the spring element 31 which protrude from the mirror 12 and which deforms if the mirror establishes contact with the landing structure.

This structuring allows controlling the spring constant of the spring element 31, in particular of the protruding sections of the spring element 31. In this way, the spring element 31 can be optimized for certain mirror 12 designs and/or requirements.

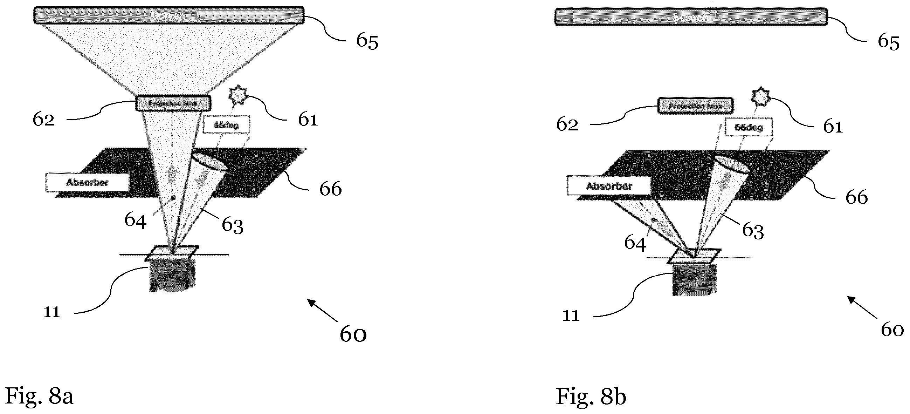

Figs. 8a-b show schematic diagrams of a projection apparatus 60 according to an embodiment.

The projection apparatus 60 comprises the light source 61, the aperture 62 and the mirror system 10 as, for example, shown in Fig. 1. For instance, the projection apparatus 60 is a spatial light modulator (SLM), e.g. a video projector, and the mirror system 10 is a digital mirror device (DMD) of the SLM. The projection apparatus 60 may comprise a processing unit (not shown) that is configured to control the operation of the mirrors 12 of the mirror system 10.

Fig. 8a shows the reflection of the light beam from the mirrors 12 of the mirror system 10 that are in the ON state, and Fig. 8b shows the reflection of the light beam from mirrors 12 of the mirror system 10 that are in the OFF state.

Preferably, the light source 61 is configured to emit the light beam 63 towards the mirror system 10 at an angle of, for instance, 66° (relative to the support surface 11 of the mirror system 10). A condenser lens can be arranged in front of the light source 61 to direct the light beam 63 as a parallel beam onto the mirrors 12. In particular, the light source 61 can be configured to emit red, green and blue light.

As shown in Fig. 8a, the mirrors 12 of the system 10 that are arranged in the ON state reflect the light onto the aperture 62. The aperture 62 can be projection lens, which is configured to project an image based on a light beam 64 that is reflected from mirrors 12 in the ON sate onto a screen 65. In particular, the reflected light beam 64 from the mirrors 12 in the ON state aligns with an optical axis of the projection apparatus 60. The mirrors 12 in the ON state are, for example, tilted at a tilting angle of +12° (relative to an axis that is perpendicular to the support surface 11 of the mirror system 10).

As shown in Fig. 8b, the mirrors 12 of the system 10 that are arranged in the OFF state reflect the light away from the aperture 62 and onto an absorption structure 66 of the projection apparatus 60.

The mirrors 12 in the OFF state are, for example, tilted at a tilting angle that is symmetric to the tilting angle of mirrors in the ON state, e.g. +12° (relative to an axis that is perpendicular to the support surface). Alternatively, the mirrors 12 in the OFF can also be tilted at a tilting angle that is asymmetric to the tilting angle of mirrors in the ON state, e.g. smaller or larger than -12° (relative to an axis that is perpendicular to the support surface). For instance, the tilting angle of mirrors 12 in the OFF state is -8°.

## Claims

1. A mirror system (10) for a projection apparatus (60), wherein the projection apparatus (60) comprises a light source (61) and an aperture (62), wherein the mirror system (10) comprises:
a support surface (11); and
a plurality of mirrors (12) arranged on the support surface (11);
wherein each of the plurality of mirrors (12) is arranged tiltable between a first and a second tilting position, wherein the first and the second tilting position are discrete positions;
wherein each mirror (12) in the first tilting position is arranged to reflect a light beam (63) that is emitted from the light source (61) onto the aperture (62);
wherein each mirror (12) in the second tilting position is arranged to reflect the light beam (63) that is emitted from the light source (61) away from the aperture (62);
wherein each of the plurality of mirrors (12) comprises a spring element (31) on an underside of the mirror (12);
wherein the spring element (31) of each mirror (12) protrudes from the underside of the mirror (12) at two opposite corners of the mirror (12); and
wherein a protruding section of the spring element (31) of each mirror (12) forms a rim around the two opposite corners of the mirror (12)..

2. The mirror system (10) of claim 1, wherein the spring element (31) of each mirror (12) supports a movement of the mirror (12) from the first to the second tilting position and vice versa, preferably by providing energy which was built up by a deformation of the spring element (31) in the first and/or second tilting position of the mirror (12).

3. The mirror system (10) of claim 1 or 2, wherein the spring element (31) of each mirror comprises at least one layer (32) on the underside of the mirror (12), which at least partially covers the underside of the mirror (12).

4. The mirror system (10) of any one of the preceding claims, wherein the spring element (31) of each mirror (12) comprises at least two spring structures (34) pointing towards the support surface (11).

5. The mirror system (10) of any one of the preceding claims, wherein the spring element (31) is made from a titanium alloy, such as titanium aluminium nitride, TiAlN, titanium aluminide, TiAl, titanium silicon aluminide, TiSiAl, or titanium aluminium silicon nitride, TiAlSiN.

6. The mirror system (10) of any one of the preceding claims, wherein a landing structure is arranged on the support surface (11) below each mirror (12) of the plurality of mirrors (12), wherein the spring element (31) of each mirror (12) in the first and/or the second tilting position is in physical contact with the landing structure.

7. The mirror system (10) of claim 6, wherein the landing structure below each mirror (12) comprises two elevated structures (17-1, 17-2), wherein the elevated structures (17-1, 17-2) are the contact points for the spring element (31) of the mirror (12) in the first respectively second tilting position.

8. The mirror system (10) of any one of the preceding claims, wherein a, preferably conductive, mount (16) is arranged on the support surface (11) below each of the plurality of mirrors (12), wherein each of the plurality of mirrors (12) is fixed to the support surface (11) by the respective mount (16) that is arranged below that mirror (12).

9. The mirror system (10) of claim 8, wherein each of the plurality of mirrors (12) comprises a hinge structure (21), which is preferably formed from the same layer (32) as the spring element (31), on the bottom of the mirror (12), wherein the respective mount (16) is fixed to the hinge structure (21) of the mirror (12).

10. The mirror system (10) of any one of claims 8 to 9, wherein each of the plurality of mirrors (12) comprises a cavity (20) on the bottom of the mirror (12), wherein the attachment point of the respective mount (16) is arranged in or below the cavity (20).

11. The mirror system (10) of any one of the preceding claims, wherein a pair of actuation electrodes (18-1, 18-2) are arranged on the support surface (11) below each of the plurality of mirrors (12), wherein the actuation electrodes (18-1, 18-2) below each mirror (12) are configured to actuate the movement of the mirror (12) from the first to the second tilting position and vice versa.

12. The mirror system (10) of any one of the preceding claims, wherein a tilting axis (T) of each of the plurality of mirrors (12) passes through or lies below the center of gravity (C) of the mirror (12).

13. The mirror system (10) of any one of the preceding claims, wherein an inclination of each mirror (12) in the first tilting position to the mirror (12) in the second tilting position is at least 10°, preferably at least 20°.

14. The mirror system (10) of any one of the preceding claims, wherein the angle at which the highest-intensity diffraction order of the light beam (63) is reflected off at least some of the mirrors (12) of the plurality of mirrors (12) that are arranged in the second tilting position corresponds to a Blaze angle.

15. A projection apparatus (60), comprising a light source (61), an aperture (62) and a mirror system (10) of any one of the preceding claims.

## Patentansprüche

1. Spiegelsystem (10) für eine Projektionsvorrichtung (60), wobei die Projektionsvorrichtung (60) eine Lichtquelle (61) und eine Apertur (62) umfasst, wobei das Spiegelsystem (10) umfasst:
eine Tragefläche (11); und
eine Vielzahl von Spiegeln (12), angeordnet auf der Tragefläche (11);
wobei jeder aus der Vielzahl von Spiegeln (12) zwischen einer ersten und einer zweiten Kippstellung kippbar eingerichtet ist, wobei die erste und die zweite Kippstellung diskrete Stellungen sind;
wobei jeder Spiegel (12) in der ersten Kippstellung eingerichtet ist zum Reflektieren eines Lichtstrahls (63), der von der Lichtquelle (61) emittiert wird, auf die Apertur (62);
wobei jeder Spiegel (12) in der zweiten Kippstellung eingerichtet ist zum Reflektieren des Lichtstrahls (63), der von der Lichtquelle (61) emittiert wird, von der Apertur (62) weg;
wobei jeder aus der Vielzahl von Spiegeln (12) ein Federelement (31) auf einer Unterseite des Spiegels (12) umfasst;
wobei das Federelement (31) jedes Spiegels (12) an zwei gegenüberliegenden Ecken des Spiegels (12) von der Unterseite des Spiegels (12) vorsteht; und
wobei ein vorstehender Abschnitt des Federelements (31) jedes Spiegels (12) einen Rand um die zwei gegenüberliegenden Ecken des Spiegels (12) bildet.

2. Spiegelsystem (10) nach Anspruch 1, wobei das Federelement (31) jedes Spiegels (12) eine Bewegung des Spiegels (12) von der ersten in die zweite Kippstellung und umgekehrt unterstützt, vorzugsweise durch Bereitstellen von Energie, die sich durch eine Verformung des Federelements (31) in der ersten und/oder zweiten Kippstellung des Spiegels (12) entwickelt hat.

3. Spiegelsystem (10) nach Anspruch 1 oder 2, wobei das Federelement (31) jedes Spiegels mindestens eine Schicht (32) auf der Unterseite des Spiegels (12) umfasst, die die Unterseite des Spiegels (12) mindestens teilweise bedeckt.

4. Spiegelsystem (10) nach einem der vorhergehenden Ansprüche, wobei das Federelement (31) jedes Spiegels (12) mindestens zwei Federstrukturen (34) umfasst, die in Richtung der Tragefläche (11) zeigen.

5. Spiegelsystem (10) nach einem der vorhergehenden Ansprüche, wobei das Federelement (31) aus einer Titanlegierung, wie etwa Titanaluminiumnitrid, TiAlN, Titanaluminid, TiAl, Titansiliciumaluminid, TiSiAl, oder Titanaluminiumsiliciumnitrid, TiAlSiN, hergestellt ist.

6. Spiegelsystem (10) nach einem der vorhergehenden Ansprüche, wobei eine Landestruktur auf der Tragefläche (11) unter jedem Spiegel (12) aus der Vielzahl von Spiegeln (12) angeordnet ist, wobei das Federelement (31) jedes Spiegels (12) in der ersten und/oder der zweiten Kippstellung in physischem Kontakt mit der Landestruktur ist.

7. Spiegelsystem (10) nach Anspruch 6, wobei die Landestruktur unter jedem Spiegel (12) zwei erhöhte Strukturen (17-1, 17-2) umfasst, wobei die erhöhten Strukturen (17-1, 17-2) die Kontaktpunkte für das Federelement (31) des Spiegels (12) in der ersten bzw. zweiten Kippstellung sind.

8. Spiegelsystem (10) nach einem der vorhergehenden Ansprüche, wobei eine, vorzugsweise leitfähige, Halterung (16) auf der Tragefläche (11) unter jedem aus der Vielzahl von Spiegeln (12) angeordnet ist, wobei jeder aus der Vielzahl von Spiegeln (12) durch die jeweilige Halterung (16), die unter diesem Spiegel (12) angeordnet ist, an der Tragefläche (11) befestigt ist.

9. Spiegelsystem (10) nach Anspruch 8, wobei jeder aus der Vielzahl von Spiegeln (12) eine Scharnierstruktur (21), die vorzugsweise aus der gleichen Schicht (32) wie das Federelement (31) gebildet ist, in dem Boden des Spiegels (12) umfasst, wobei die jeweilige Halterung (16) an der Scharnierstruktur (21) des Spiegels (12) befestigt ist.

10. Spiegelsystem (10) nach einem der Ansprüche 8 bis 9, wobei jeder aus der Vielzahl von Spiegeln (12) eine Aushöhlung (20) in dem Boden des Spiegels (12) umfasst, wobei der Befestigungspunkt der jeweiligen Halterung (16) in oder unter der Aushöhlung (20) angeordnet ist.

11. Spiegelsystem (10) nach einem der vorhergehenden Ansprüche, wobei ein Paar von Antriebselektroden (18-1, 18-2) auf der Tragefläche (11) unter jedem aus der Vielzahl von Spiegeln (12) angeordnet ist, wobei die Antriebselektroden (18-1, 18-2) unter jedem Spiegel (12) ausgelegt sind zum Antreiben der Bewegung des Spiegels (12) aus der ersten in die zweite Kippstellung und umgekehrt.

12. Spiegelsystem (10) nach einem der vorhergehenden Ansprüche, wobei eine Kippachse (T) jedes aus der Vielzahl von Spiegeln (12) durch den Schwerpunkt (C) des Spiegels (12) hindurchgeht oder darunter liegt.

13. Spiegelsystem (10) nach einem der vorhergehenden Ansprüche, wobei eine Neigung jedes Spiegels (12) in der ersten Kippstellung zu dem Spiegel (12) in der zweiten Kippstellung mindestens 10°, vorzugsweise mindestens 20°, beträgt.

14. Spiegelsystem (10) nach einem der vorhergehenden Ansprüche, wobei der Winkel, unter dem die intensivste Beugungsordnung des Lichtstrahls (63) von mindestens einigen der Spiegel (12) aus der Vielzahl von Spiegeln (12), die in der zweiten Kippstellung angeordnet sind, reflektiert wird, einem Blazewinkel entspricht.

15. Projektionsvorrichtung (60), umfassend eine Lichtquelle (61), eine Apertur (62) und ein Spiegelsystem (10) nach einem der vorhergehenden Ansprüche.

## Revendications

1. Système (10) de miroirs pour un appareil de projection (60), l'appareil de projection (60) comprenant une source lumineuse (61) et une ouverture (62), le système (10) de miroirs comprenant :
une surface de support (11) ; et
une pluralité de miroirs (12) agencés sur la surface de support (11) ;
chacun de la pluralité de miroirs (12) étant agencé inclinable entre une première et une deuxième position d'inclinaison, la première et la deuxième position d'inclinaison étant des positions discrètes ;
chaque miroir (12) dans la première position d'inclinaison étant agencé de manière à réfléchir un faisceau lumineux (63) qui est émis par la source lumineuse (61) sur l'ouverture (62) ;
chaque miroir (12) dans la deuxième position d'inclinaison étant agencé de manière à réfléchir le faisceau lumineux (63) qui est émis par la source lumineuse (61) à l'écart de l'ouverture (62) ;
chacun de la pluralité de miroirs (12) comprenant un élément ressort (31) sur un dessous du miroir (12) ;
l'élément ressort (31) de chaque miroir (12) faisant saillie depuis le dessous du miroir (12) au niveau de deux coins opposés du miroir (12) ; et
une portion en saillie de l'élément ressort (31) de chaque miroir (12) formant un rebord autour des deux coins opposés du miroir (12).

2. Système (10) de miroirs selon la revendication 1, dans lequel l'élément ressort (31) de chaque miroir (12) favorise un mouvement du miroir (12) de la première à la deuxième position d'inclinaison et inversement, de préférence en fournissant de l'énergie qui a été accumulée par une déformation de l'élément ressort (31) dans la première et/ou la deuxième position d'inclinaison du miroir (12).

3. Système (10) de miroirs selon la revendication 1 ou 2, dans lequel l'élément ressort (31) de chaque miroir comprend au moins une couche (32) sur le dessous du miroir (12), laquelle recouvre au moins partiellement le dessous du miroir (12).

4. Système (10) de miroirs selon l'une quelconque des revendications précédentes, dans lequel l'élément ressort (31) de chaque miroir (12) comprend au moins deux structures ressorts (34) orientées vers la surface de support (11).

5. Système (10) de miroirs selon l'une quelconque des revendications précédentes, dans lequel l'élément ressort (31) est constitué d'un alliage de titane, tel que du nitrure de titane et d'aluminium, TiAlN, de l'aluminure de titane, TiAl, de l'aluminure de titane et de silicium, TiSiAl, ou du nitrure de titane, d'aluminium et de silicium, TiAlSiN.

6. Système (10) de miroirs selon l'une quelconque des revendications précédentes, dans lequel une structure d'appui est agencée sur la surface de support (11) sous chaque miroir (12) de la pluralité de miroirs (12), l'élément ressort (31) de chaque miroir (12) dans la première et/ou la deuxième position d'inclinaison étant au contact physique de la structure d'appui.

7. Système (10) de miroirs selon la revendication 6, dans lequel la structure d'appui sous chaque miroir (12) comprend deux structures surélevées (17-1, 17-2), les structures surélevées (17-1, 17-2) constituant les points de contact pour l'élément ressort (31) du miroir (12) dans la première, respectivement la deuxième, position d'inclinaison.

8. Système (10) de miroirs selon l'une quelconque des revendications précédentes, dans lequel une fixation (16), de préférence conductrice, est agencée sur la surface de support (11) sous chacun de la pluralité de miroirs (12), chacun de la pluralité de miroirs (12) étant fixé à la surface de support (11) par la fixation (16) respective qui est agencée sous ce miroir (12).

9. Système (10) de miroirs selon la revendication 8, dans lequel chacun de la pluralité de miroirs (12) comprend une structure charnière (21), de préférence formée à partir de la même couche (32) que l'élément ressort (31), au bas du miroir (12), la fixation (16) respective étant fixée à la structure charnière (21) du miroir (12).

10. Système (10) de miroirs selon l'une quelconque des revendications 8 à 9, dans lequel chacun de la pluralité de miroirs (12) comprend une cavité (20) au bas du miroir (12), le point d'attache de la fixation (16) respective étant agencé dans ou sous la cavité (20).

11. Système (10) de miroirs selon l'une quelconque des revendications précédentes, dans lequel une paire d'électrodes d'actionnement (18-1, 18-2) est agencée sur la surface de support (11) sous chacun de la pluralité de miroirs (12), les électrodes d'actionnement (18-1, 18-2) sous chaque miroir (12) étant configurées pour animer le miroir (12) d'un mouvement de la première à la deuxième position d'inclinaison et inversement.

12. Système (10) de miroirs selon l'une quelconque des revendications précédentes, dans lequel un axe d'inclinaison (T) de chacun de la pluralité de miroirs (12) passe par, ou se situe sous, le centre de gravité (C) du miroir (12).

13. Système (10) de miroirs selon l'une quelconque des revendications précédentes, dans lequel une inclinaison de chaque miroir (12) dans la première position d'inclinaison par rapport au miroir (12) dans la deuxième position d'inclinaison est d'au moins 10°, de préférence d'au moins 20°.

14. Système (10) de miroirs selon l'une quelconque des revendications précédentes, dans lequel l'angle auquel l'ordre de diffraction de plus forte intensité du faisceau lumineux (63) est réfléchi par au moins certains des miroirs (12) de la pluralité de miroirs (12) qui sont agencés dans la deuxième position d'inclinaison correspond à un angle de blaze.

15. Appareil de projection (60), comprenant une source lumineuse (61), une ouverture (62) et un système (10) de miroirs selon l'une quelconque des revendications précédentes.
